# EUROPÄISCHE PATENTANMELDUNG

(11) **EP 4 531 260 A1**
(43) Veröffentlichungstag der Anmeldung: **02.04.2025**
(21) Anmeldenummer: 24202013.9
(22) Anmeldetag: 23.09.2024
(51) Int. Cl.: H02M 3/335, H02M 1/32

(54) **SPANNUNGSWANDLER UND VERFAHREN ZUM BETREIBEN EINES SPANNUNGSWANDLERS**

(30) Priorität: 28.09.2023 DE 102023209496
(71) Anmelder: Siemens Mobility GmbH, 81739 München (DE)
(72) Erfinder: Engelbrecht, Christoph, 38173 Sickte (DE); Weitzel, Joshua, 31275 Lehrte (DE)
(74) Vertreter: Siemens Patent Attorneys

(57) **Zusammenfassung**

Die Erfindung bezieht sich unter anderem auf einen Spannungswandler (1) mit einer Primärseite (11) zum Anlegen einer Eingangsspannung (Ue) und einer Sekundärseite (12), an der der Spannungswandler (1) eine Ausgangsspannung (Ua) zur Verfügung stellt. Erfindungsgemäß ist vorgesehen, dass der Spannungswandler (1) eine Überwachungseinrichtung (50) mit mindestens einem Überwachungskanal (100) aufweist, der einen Transformator (130) umfasst, wobei der Transformator (130) eine auf der Sekundärseite (12) des Spannungswandlers (1) angeordnete Sekundäreinheit (120) des Überwachungskanals (100) mit einer auf der Primärseite (11) des Spannungswandlers (1) angeordneten Primäreinheit (110) des Überwachungskanals (100) unter Potentialtrennung verbindet und eine elektromagnetische Übertragung eines von der Sekundäreinheit (120) ausgelösten Auslösesignals (S) zur Primäreinheit (110) ermöglicht, wobei die Sekundäreinheit (120) dazu ausgestaltet ist, das Auslösesignal (S) auszulösen, wenn eine überwachte Spannung, die der Ausgangsspannung (Ua) entspricht oder von dieser abhängt, auf der Sekundärseite (12) einen vorgegebenen Maximalspannungswert überschreitet, und wobei die Primäreinheit (110) dazu ausgestaltet ist, bei Empfang des Auslösesignals (S) den Spannungswandlerbetrieb des Spannungswandlers (1) zu deaktivieren.

## Beschreibung

Die Erfindung bezieht sich auf einen Spannungswandler, der mit einer Primärseite zum Anlegen einer Eingangsspannung und einer Sekundärseite, an der der Spannungswandler eine Ausgangsspannung zur Verfügung stellt, ausgestattet ist.

DE 102016109649 A1 beschreibt ein primärgetaktetes Schaltnetzteil zum Wandeln einer Eingangsspannung in eine Ausgangsspannung umfassend eine im primärseitigen Schaltungszweig angeordnete Sicherung, die dazu eingerichtet ist, einen primärseitigen Stromfluss zu unterbrechen; ein erstes durch ein Steuersignal schaltbares Schaltelement, welches im primärseitigen Schaltungszweig derartig zur Sicherung angeordnet ist, dass es beim Schalten durch das Steuersignal die primärseitige Sicherung auslöst; ein erstes Rückkopplungselement, welches derartig ausgebildet ist, dass es das Steuersignal vom sekundärseitigen Schaltungszweig über die galvanische Trennung zu dem primärseitig angeordneten ersten Schaltelement führt und im Fehlerfall das erste Schaltelement anhand des Steuersignals schaltet.

Der Erfindung liegt die Aufgabe zugrunde, einen Spannungswandler anzugeben, der eine aufwandsarme, aber dennoch zuverlässige Funktionsüberwachung des Spannungswandlers oder einer mit dieser in Verbindung stehenden Schaltung ermöglicht.

Diese Aufgabe wird erfindungsgemäß durch einen Spannungswandler mit den Merkmalen gemäß Patentanspruch 1 gelöst. Vorteilhafte Ausgestaltungen des erfindungsgemäßen Spannungswandlers sind in Unteransprüchen angegeben.

Danach ist erfindungsgemäß vorgesehen, dass der Spannungswandler eine Überwachungseinrichtung mit mindestens einem Überwachungskanal aufweist, der einen Transformator umfasst, wobei der Transformator eine auf der Sekundärseite des Spannungswandlers angeordnete Sekundäreinheit des Überwachungskanals mit einer auf der Primärseite des Spannungswandlers angeordneten Primäreinheit des Überwachungskanals unter Potentialtrennung verbindet und eine elektromagnetische Übertragung eines von der Sekundäreinheit ausgelösten Auslösesignals zur Primäreinheit ermöglicht, wobei die Sekundäreinheit dazu ausgestaltet ist, das Auslösesignal auszulösen, wenn eine überwachte Spannung, die der Ausgangsspannung entspricht oder von dieser abhängt, auf der Sekundärseite einen vorgegebenen Maximalspannungswert überschreitet, und wobei die Primäreinheit dazu ausgestaltet ist, bei Empfang des Auslösesignals den Spannungswandlerbetrieb des Spannungswandlers zu deaktivieren.

Ein wesentlicher Vorteil des erfindungsgemäßen Spannungswandlers ist darin zu sehen, dass der zur Potentialtrennung vorgesehene Transformator eine Übertragung eines Auslösesignals mit sehr geringem Aufwand an elektrischen Bauelementen auch im Falle einer sehr hohen zu überwachenden Spannung bzw. im Falle eines sehr großen Ausgangsspannungsbereichs ermöglicht. Anders als beispielsweise Optokoppler können Transformatoren nämlich ohne die Gefahr einer Zerstörung zumindest kurzzeitig mit vergleichsweise hohen Auslösespannungen beaufschlagt werden, ohne dass hochohmige Vorwiderstände zum Schutz vorgesehen werden müssen.

Aus Gründen der Redundanz wird es als vorteilhaft angesehen, wenn die Überwachungseinrichtung zwei oder mehr Überwachungskanäle aufweist, die jeweils einen Transformator, eine Primäreinheit und eine Sekundäreinheit aufweisen.

Die Transformatoren der Überwachungskanäle teilen sich vorzugsweise einen gemeinsamen Transformatorkern. Bei einer solchen Ausführungsform lässt sich nämlich erreichen, dass eine einzige Sekundäreinheit eines einzigen Überwachungskanals gleichzeitig in allen Primäreinheiten aller Überwachungskanäle eine Auslösung hervorrufen kann und alle Primäreinheiten jeweils für sich allein eine Deaktivierung des Spannungswandlerbetriebs bewirken können, wenn nur eine einzige Sekundäreinheit ausgelöst wurde.

Der gemeinsame Transformatorkern ist vorzugsweise derart bemessen, dass er sättigungsfrei gleichzeitig die Auslösesignale aller Überwachungskanäle übertragen kann.

Mit Blick auf geringe Kosten und wenig Bauraum wird es als vorteilhaft angesehen, wenn die Transformatoren der Überwachungskanäle jeweils Planartransformatoren sind und die Planartransformatoren übereinander gestapelt sind.

Alternativ kann in vorteilhafter Weise vorgesehen sein, dass die Transformatoren der Überwachungskanäle jeweils eine Primärspule und eine Sekundärspule umfassen, die auf ein und denselben bzw. einem gemeinsamen Spulenkörper aufgewickelt sind.

Vorteilhaft ist es beispielsweise, wenn es sich bei den Transformatoren um Spulentransformatoren handelt, bei denen jeweils die Primärspule und die Sekundärspule eines jeden Transformators auf einem transformatoreigenen Spulenkörperabschnitt des gemeinsamen Spulenkörpers aufgewickelt sind. Die Primärspule ist von der Sekundärspule vorzugsweise durch eine Isolation elektrisch getrennt.

Die Primärspulen der Transformatoren sind in den transformatoreigenen Spulenkörperabschnitten vorzugsweise jeweils innenliegend und die Sekundärspulen jeweils radial außenliegend angeordnet; alternativ kann die radiale Anordnung auch umgekehrt sein. Auch ist es denkbar, dass bei mindestens einem der Transformatoren die Primärspule radial innen liegt und bei mindestens einem anderen Transformator die Primärspule radial außen liegt.

Die Spulenkörperabschnitte der Transformatoren sind vorzugsweise axial entlang der Längsachse des Spulenkörpers versetzt bzw. hintereinander benachbart angeordnet.

Besonders vorteilhaft ist es, wenn sich die Transformatoren einen gemeinsamen Transformatorkern teilen, der sich axial durch ein Durchgangsloch im Spulenkörper hindurch erstreckt. Ein Vorteil eines gemeinsamen Transformatorkerns ist auch hier darin zu sehen, dass ein sekundärseitiges Auslösesignal eines einzigen Überwachungskanals gleichzeitig ein Auslösesignal in den Primäreinheiten aller Überwachungskanäle hervorruft, also alle Überwachungskanäle gleichzeitig primärseitig aktiviert werden.

Die Primäreinheit eines jeden Überwachungskanals weist vorzugsweise ein Primärschaltelement auf, das bei Eingang des Auslösesignals eingeschaltet wird und ein Sicherungselement des Spannungswandlers auslöst.

Die Primärschaltelemente sind vorzugsweise elektrisch parallelgeschaltet und stehen jeweils elektrisch mit ein und demselben Anschluss des Sicherungselements in Verbindung.

Das Sicherungselement wird vorzugsweise mit der Eingangsspannung beaufschlagt, wenn zumindest eines der Primärschaltelemente eingeschaltet wird.

Das Auslösen des Sicherungselements deaktiviert vorzugsweise eine den Spannungswandlerbetrieb des Spannungswandlers steuernde Steuereinrichtung und schaltet damit einen Energietransfer von der Primärseite zur Sekundärseite ab.

Das Auslösen des Sicherungselements bewirkt vorzugsweise ein Abschalten der Versorgungsspannung der Steuereinrichtung.

Besonders vorteilhaft ist es, wenn das Sicherungselement eine dauerhafte Abschaltung bewirkt. Bei dem Sicherungselement kann es sich beispielsweise um eine Schmelzsicherung handeln. Besonders vorteilhaft ist es, wenn die Sekundäreinheit eines jeden Überwachungskanals ein mit dem Transformator des jeweiligen Überwachungskanals elektrisch in Reihe liegendes Sekundärschaltelement sowie eine Vergleichsschaltung aufweist.

Die Vergleichsschaltung schaltet bei Überschreiten des Maximalspannungswerts vorzugsweise das Sekundärschaltelement ein und löst einen das Auslösesignal bildenden Strompuls durch den Transformator aus.

Bezüglich des Spannungswandlers wird es als vorteilhaft angesehen, wenn dieser einen die Sekundärseite von der Primärseite potentialmäßig trennenden Betriebstransformator aufweist, der im Wandlerbetrieb des Spannungswandlers mit Strompulsen beaufschlagt wird.

Das Schalten der Strompulse wird vorzugsweise von der Steuereinrichtung des Spannungswandlers mittels eines mit der Primärwicklung des Betriebstransformators elektrisch in Reihe liegenden Schaltelements gesteuert, das von der Steuereinrichtung des Spannungswandlers ein- und ausgeschaltet wird.

Bei dem Spannungswandler kann es beispielsweise um einen Sperrwandler bzw. einen Flusswandler oder Vollbrückenwandler handeln.

Der Spannungswandler wird vorzugsweise im Bereich der Eisenbahntechnik eingesetzt. Demgemäß bezieht sich die Erfindung außerdem auf eine Eisenbahnkomponente für eine Eisenbahngleisanlage, die mit einem Spannungswandler wie oben beschrieben ausgestattet ist.

Bei der Eisenbahnkomponente handelt es sich vorzugsweise um eine Stromversorgungsbaugruppe, wobei die Ausgangsspannung zur Versorgung von Stellteilen wie Signalgebern, Steuerungskomponenten für Weichen oder Bahnübergänge oder anderen Steuerungskomponenten in Stellwerken verwendet wird.

Die Erfindung bezieht dich außerdem auf ein Verfahren zum Betreiben eines Spannungswandlers, der mit einer Primärseite zum Anlegen einer Eingangsspannung und einer Sekundärseite, an der der Spannungswandler eine Ausgangsspannung zur Verfügung stellt, ausgestattet ist. Bezüglich dieses Verfahrens ist erfindungsgemäß vorgesehen, dass auf der Sekundärseite ein Auslösesignal ausgelöst wird, wenn eine auf der Sekundärseite überwachte Spannung, die der Ausgangsspannung entspricht oder von dieser abhängt, einen vorgegebenen Maximalspannungswert überschreitet, das Auslösesignal über einen Transformator, der die Primärseite des Spannungswandlers und die Sekundärseite des Spannungswandlers potentialmäßig getrennt hält, elektromagnetisch zu der Primärseite übertragen wird und bei Empfang des Auslösesignals auf der Primärseite der Spannungswandlerbetrieb des Spannungswandlers auf der Primärseite deaktiviert wird.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Spannungswandler und dessen vorteilhafter Ausgestaltungen verwiesen.

Die Erfindung wird nachfolgend anhand von Ausführungsbeispielen näher erläutert; dabei zeigen beispielhaft:
- Figur 1: ein Ausführungsbeispiel für einen erfindungsgemä-ßen Spannungswandler, der mit einem einzigen Überwachungskanal ausgestattet ist,
- Figur 2: eine vorteilhafte Ausgestaltung des Überwachungskanals bei dem Spannungswandler gemäß Figur 1,
- Figur 3: ein Ausführungsbeispiel für einen erfindungsgemä-ßen Spannungswandler, der mit mehreren Überwachungskanälen ausgestattet ist,
- Figur 4: näher im Detail einen vorteilhaften mechanischen Aufbau im Falle einer Überwachungseinrichtung, die drei Überwachungskanäle mit drei voneinander getrennten Planartransformatoren aufweist,
- Figur 5: näher im Detail einen vorteilhaften mechanischen Aufbau im Falle einer Überwachungseinrichtung, die drei Überwachungskanäle mit drei elektromagnetisch miteinander verkoppelten Planartransformatoren aufweist, und
- Figur 6: näher im Detail einen vorteilhaften mechanischen Aufbau im Falle einer Überwachungseinrichtung, die drei Überwachungskanäle mit drei elektromagnetisch miteinander verkoppelten Spulentransformatoren aufweist.

In den Figuren werden der Übersicht halber für identische oder vergleichbare Komponenten stets dieselben Bezugszeichen verwendet.

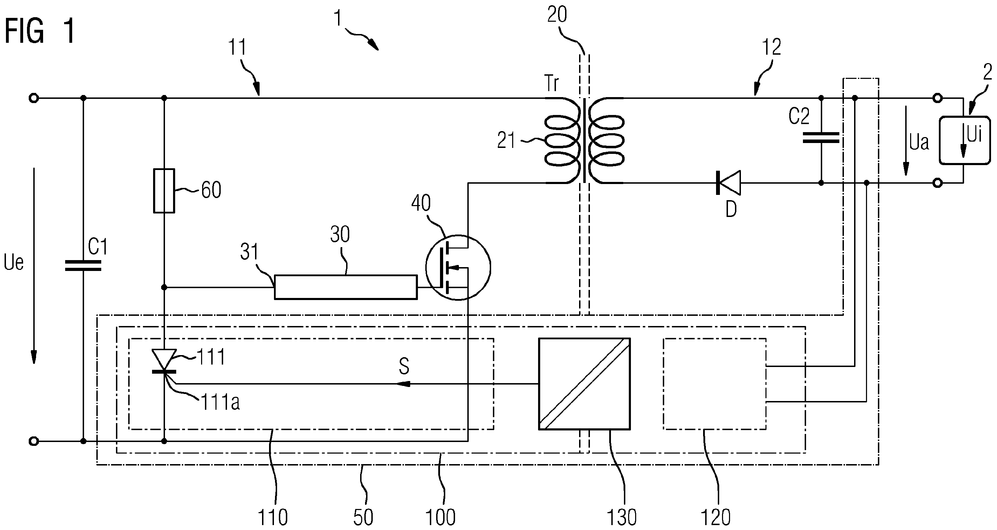

Die Figur 1 zeigt ein erstes Ausführungsbeispiel für einen erfindungsgemäßen Spannungswandler 1, der mit einer Primärseite 11 zum Anlegen einer Eingangsspannung Ue und einer Sekundärseite 12, an der der Spannungswandler 1 eine Ausgangsspannung Ua zur Verfügung stellt, ausgestattet ist. Die Eingangsspannung Ue wird bei dem Ausführungsbeispiel gemäß Figur 1 durch eine primärseitige Eingangskapazität C1 stabilisiert.

Bei dem Spannungswandler 1 kann es sich beispielsweise um einen Sperrwandler handeln, der einen die Sekundärseite 12 von der Primärseite 11 potentialmäßig trennenden Betriebstransformator 20 aufweist. Der Betriebstransformator 20 kann beispielsweise auf der Primärseite 11 mit Strompulsen beaufschlagt werden, um auf der Sekundärseite 12 über eine sekundärseitige Diode D eine sekundärseitige Ausgangskapazität C2 aufzuladen, an der die Ausgangsspannung Ua des Spannungswandlers 1 abfällt.

Das Schalten der Strompulse wird vorzugsweise von einer Steuereinrichtung 30 des Spannungswandlers 1 mittels eines mit der Primärwicklung 21 des Betriebstransformators 20 elektrisch in Reihe liegenden Schaltelements 40 gesteuert, das von der Steuereinrichtung 30 ein- und ausgeschaltet wird.

Der Spannungswandler 1 weist insbesondere zum Überwachen seiner korrekten Arbeitsweise eine Überwachungseinrichtung 50 mit mindestens einem Überwachungskanal 100 auf.

Ein Transformator 130 des Überwachungskanals 100 verbindet eine auf der Sekundärseite 12 des Spannungswandlers 1 angeordnete Sekundäreinheit 120 des Überwachungskanals 100 mit einer auf der Primärseite 11 des Spannungswandlers 1 angeordneten Primäreinheit 110 des Überwachungskanals 100, und zwar unter Potentialtrennung, und ermöglicht eine elektromagnetische Übertragung eines von der Sekundäreinheit 120 erzeugten Auslösesignals S zur Primäreinheit 110.

Die Sekundäreinheit 120 dient dazu, das Auslösesignal S auszulösen, wenn eine überwachte Spannung, im Ausführungsbeispiel gemäß Figur 1 ist dies die Ausgangsspannung Ua des Spannungswandlers 1, auf der Sekundärseite 12 einen vorgegebenen Maximalspannungswert überschreitet. Alternativ kann es sich bei der überwachten Spannung auch um eine andere Spannung handeln, beispielsweise um eine interne Spannung Ui einer an den Spannungswandler 1 angeschlossenen und in der Figur 1 aus Gründen der Übersicht nur angedeuteten Schaltung 2.

Die Primäreinheit 110 dient dazu, bei Empfang des Auslösesignals S den Spannungswandlerbetrieb des Spannungswandlers 1 zu deaktivieren. Zu diesem Zweck weist die Primäreinheit 110 ein Primärschaltelement 111 auf, bei dem es sich beispielsweise um einen Thyristor handeln kann. Ein Zündeingang 111a des Primärschaltelements 111 ist mit dem Transformator 130 verbunden und wird im Auslösefall mit dem Auslösesignal S beaufschlagt.

Das Primärschaltelement 111 ist mit einem Sicherungselement 60 in Reihe geschaltet, das im Falle eines Durchschaltens des Primärschaltelements 111 aktiviert wird und dauerhaft hochohmig wird, wodurch die Verbindung zwischen der Versorgungsspannung der Steuereinrichtung 30 und einem Stromversorgungseingang 31 der Steuereinrichtung 30 unterbrochen und dadurch der Wandlerbetrieb des Spannungswandlers 1 deaktiviert wird.

Bei dem Ausführungsbeispiel gemäß Figur 1 wird die Versorgungsspannung der Steuereinrichtung 30 durch die Eingangsspannung Ue des Spannungswandlers 1 gebildet und das Aktivieren des Sicherungselements 60 wird durch das Verbinden des Sicherungselements 60 mit Massepotential bzw. das Anlegen der Eingangsspannung Ue des Spannungswandlers 1 an das Sicherungselement 60 erreicht.

Bei dem Sicherungselement 60 kann es sich beispielsweise um eine Schmelzsicherung handeln, die bei Anliegen der Eingangsspannung Ue gezündet wird. Alternativ sind auch andere Ausführungsformen für das Sicherungselement 60 möglich: Beispielsweise kann es sich bei dem Sicherungselement 60 auch um einen Schalter handeln, der beim Zünden des Primärschaltelements 111 ausgeschaltet wird und nach einem Ausschalten manuell wieder eingeschaltet werden kann.

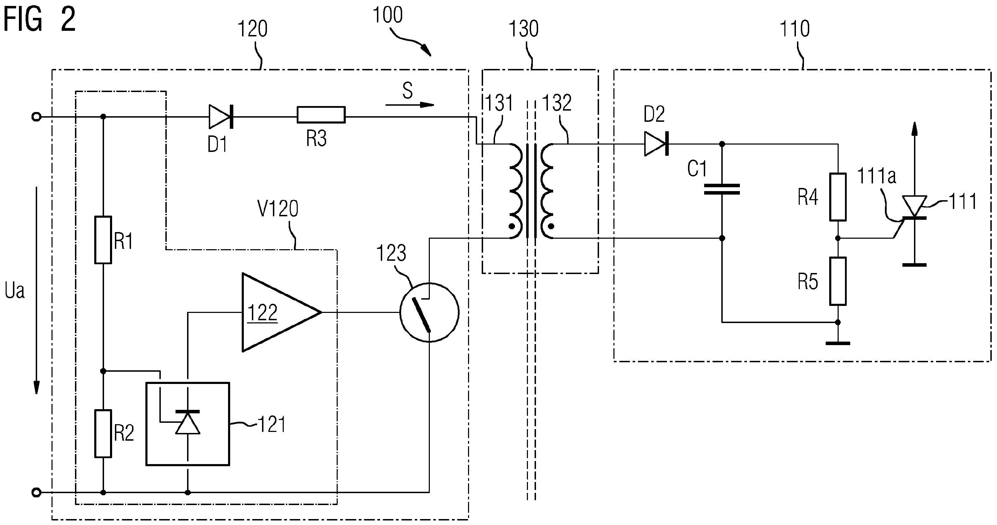

Die Figur 2 zeigt ein Ausführungsbeispiel für den Überwachungskanal 100 des Spannungswandlers 1 gemäß Figur 1 näher im Detail. Die in der Figur 2 links dargestellte Sekundäreinheit 120 umfasst eingangsseitig einen aus zwei in Reihe geschalteten Widerständen R1 und R2 gebildeten sekundäreinheitsseitigen Spannungsteiler, an dem die Ausgangsspannung Ua des Spannungswandlers 1 anliegt. An den Mittenanschluss des Spannungsteilers ist ein Vergleichselement 121 angeschlossen, dem eine Logikschaltung 122 nachgeordnet ist. Die Logikschaltung 122 kann bei Aktivierung ein nachgeordnetes Sekundärschaltelement 123 einschalten, das mit einer Anschlussseite 131 des Transformators 130, einem sekundäreinheitsseitigen Widerstand R3 und einer sekundäreinheitsseitigen Diode D1 in Reihe liegt.

Die Widerstände R1 und R2, das Vergleichselement 121 und die Logikschaltung 122 bilden eine zur Überwachung der Ausgangsspannung geeignete Vergleichsschaltung V120 der Sekundäreinheit 120.

An der anderen Anschlussseite 132 des Transformators 130 sind eine primäreinheitsseitige Diode D2 und eine primäreinheitsseitige Parallelschaltung angeschlossen. Die letztgenannte Parallelschaltung umfasst eine Kapazität C3 und eine Reihenschaltung aus zwei Widerständen R4 und R5, die einen Spannungsteiler bilden. An den Mittenanschluss des Spannungsteilers ist der Zündeingang 111a des Primärschaltelements 111 gemäß Figur 1 angeschlossen. Der durch die Widerstände R4 und R5 gebildete Spannungsteiler definiert die am Primärschaltelement 111 anliegende Spannung und damit die Auslöseschwelle für das Primärschaltelement 111.

Im Normalbetrieb des Spannungswandlers 1 liegt die Ausgangsspannung Ua unterhalb einer durch einen Maximalspannungswert definierten Abschaltschwelle. In diesem Falle reicht der Spannungsabfall über dem Widerstand R2 nicht aus, um eine dem Vergleichselement 121 vorgegebene Referenzspannung, die dem Maximalspannungswert entspricht, zu erreichen oder zu überschreiten. Die Logikschaltung 122 wird daher nicht aktiviert und das Sekundärschaltelement 123 bleibt nichtleitend und es wird kein Auslösesignal S zur Abschaltung übertragen.

Im Fehlerfall überschreitet die Ausgangsspannung Ua die Abschaltschwelle, sodass der Spannungsabfall über dem Widerstand R2 die Referenzspannung des Vergleichselements 121 übersteigt. Das Vergleichselement 121 wird leitend und aktiviert dadurch die Logikschaltung 122, die wiederum das Sekundärschaltelement 123 einschaltet und dieses dadurch in einen leitenden Zustand versetzt. Durch das Einschalten des Sekundärschaltelements 123 wird ein Stromfluss durch den Transformator 130 hervorgerufen. Der Energieimpuls, der aus dem Stromfluss durch den Transformator 130 resultiert, wird in der Primäreinheit 110 über die Diode D2 gleichgerichtet und im Kondensator C1 gepuffert. Die Spannung an dem Kondensator C1 führt zu dem Auslösesignal S, das das Primärschaltelement 111 zündet und die Versorgungsspannung bzw. die Eingangsspannung Ue von der Steuereinrichtung 30 gemäß Figur 1 abtrennt, wodurch die Energieübertragung über den Betriebstransformator 20 abgeschaltet wird.

Der Widerstand R3 in der Sekundäreinheit 120 definiert und begrenzt den Stromfluss durch den Transformator 130 und kann anwendungsspezifisch dimensioniert werden. Die sekundäreinheitsseitige Diode D1 sorgt für eine Entkopplung der Sekundäreinheit 120 von den übrigen Komponenten des Spannungswandlers 1.

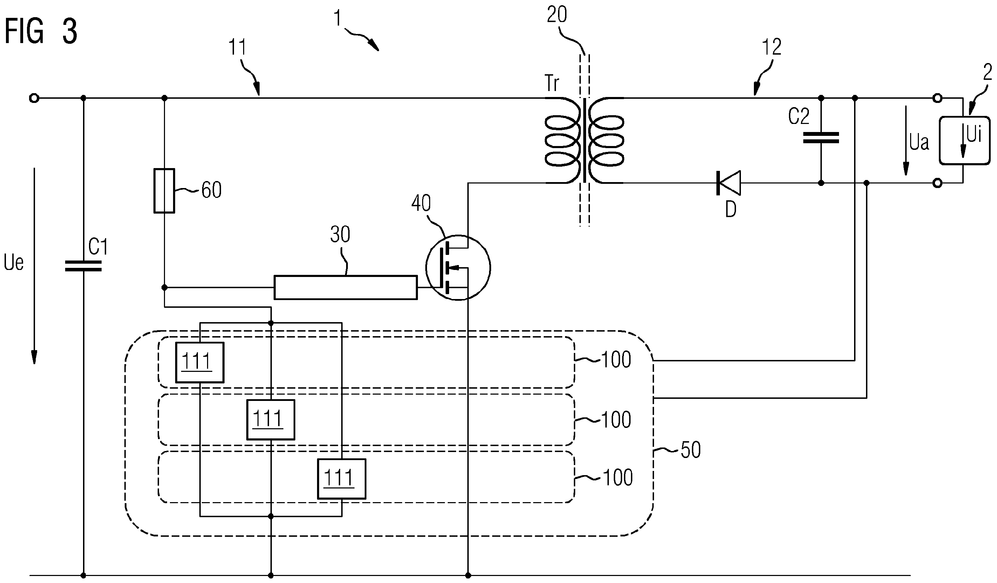

Die Figur 3 zeigt ein zweites Ausführungsbeispiel für einen erfindungsgemäßen Spannungswandler 1. Bei dem Spannungswandler 1 gemäß Figur 3 umfasst die Überwachungseinrichtung 50 drei Überwachungskanäle 100, von denen jeweils jeder an das Sicherungselement 60 angeschlossen ist und jeweils jeder das Sicherungselement 60 mit Masse verbinden kann. Zu diesem Zwecke ist jeder der Überwachungskanäle 100 jeweils mit einem Primärschaltelement 111 ausgestattet, das die entsprechende elektrische Verbindung zwischen dem Sicherungselement 60 und dem Masseanschluss herstellen kann. Die Primärschaltelemente 111 sind vorzugsweise elektrisch parallelgeschaltet; durch diesen redundanten Aufbau wird ein besonders hohes Maß an Zuverlässigkeit der Überwachungseinrichtung 50 erreicht, weil jeweils jedes der Primärschaltelemente 111 das Sicherungselement 60 auslösen kann.

Die Überwachungskanäle 100 können baugleich sein und jeweils mit dem im Zusammenhang mit der Figur 2 erläuterten Überwachungskanal 100 identisch sein.

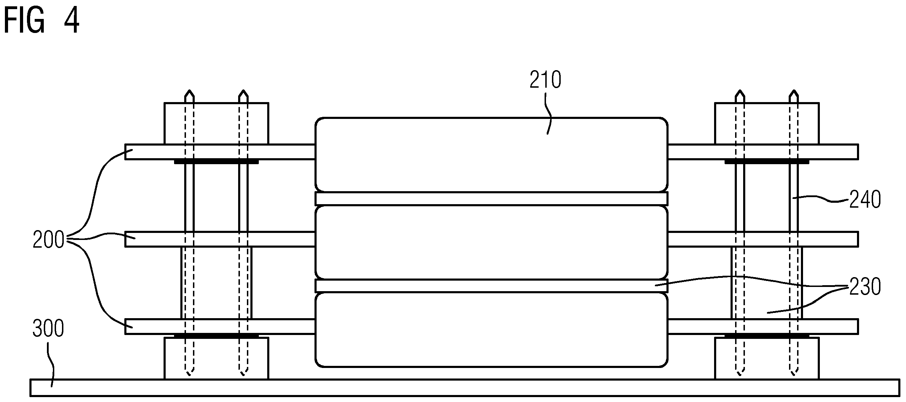

Die Figur 4 zeigt beispielhaft, dass es sich bei den Transformatoren 130 gemäß den Figuren 1 bis 3 um Planartransformatoren handeln kann, die jeweils in Form von spiralförmigen Leiterbahnen in einer zugeordneten Leiterplatte 200 integriert sind. Die Leiterplatten 200 sind aus Gründen der Platzersparnis vorzugsweise vertikal (damit ist hier senkrecht zur Leiterplattenebene der Leiterplatten 200 gemeint) übereinandergestapelt.

Bei dem Ausführungsbeispiel gemäß Figur 4 ist jeder der Planartransformatoren jeweils auf einer eigenen Leiterplatte 200 angeordnet und weist jeweils einen eigenen Transformatorkern 210 auf. Die Leiterplatten 200 und die Transformatorkerne 210 werden mittels elektrisch isolierenden Abstandshaltern 230 vertikal auf Abstand gehalten.

Die Leiterplatten 200 stehen über elektrisch leitfähige Platinenverbinder 240 mittelbar oder unmittelbar mit dem Sicherungselement 60 des Spannungswandlers 1 (vgl. Figuren 1 bis 3) in Verbindung. Das Sicherungselement 60 ist vorzugsweise auf einer die Leiterplatten 200 tragenden Basisleiterplatte 300 angeordnet.

Die Primär- und Sekundäreinheiten eines jeden Überwachungskanals 100 können jeweils auf der den Planartransformator des jeweiligen Überwachungskanals tragenden Leiterplatte 200 angeordnet sein oder alternativ auf der Basisleiterplatte 300, auf der der Stapel der Planartransformatoren angeordnet ist und die vorzugsweise die übrigen Komponenten des Spannungswandlers 1 trägt. Besonders vorteilhaft ist es, wenn jeder Überwachungskanal 100 jeweils als selbständige Einheit auf einer eigenen Leiterplatte 200 angeordnet ist und die Überwachungskanäle unabhängige Baumodule bilden.

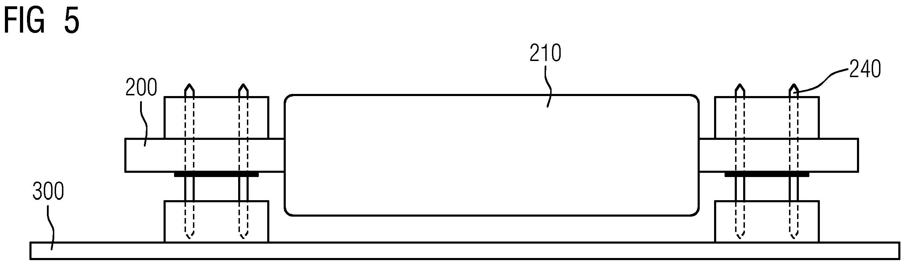

Die Figur 5 zeigt eine weitere bevorzugte Ausgestaltung und Anordnung der Transformatoren 130 für den Fall, dass zwei oder mehr Überwachungskanäle 100 vorhanden sind, also beispielsweise für den in der Figur 3 gezeigten Fall mit drei Überwachungskanälen 100 und drei Transformatoren 130.

Bei dem Ausführungsbeispiel gemäß Figur 5 handelt es sich bei den Transformatoren um Planartransformatoren, die in einer mehrlagigen Leiterplatte 200 übereinandergestapelt sind und über Platinenverbinder 240 mit der Basisleiterplatte 300 verbunden sind.

Im Unterschied zu dem Ausführungsbeispiel gemäß Figur 4 teilen sich die Planartransformatoren einen gemeinsamen Transformatorkern 210. Ein Vorteil eines gemeinsamen Transformatorkerns 210 ist darin zu sehen, dass bereits ein einziges sekundärseitiges Auslösesignal S eines einzigen Überwachungskanals 100 gleichzeitig ein Auslösesignal S in den Primäreinheiten 110 aller Überwachungskanäle 100 hervorrufen kann und somit die Primäreinheiten aller Überwachungskanäle 100 jeweils für sich allein primärseitig das Sicherungselement 60 aktivieren können.

Im Übrigen entspricht das Ausführungsbeispiel gemäß Figur 5 dem Ausführungsbeispiel gemäß Figur 4.

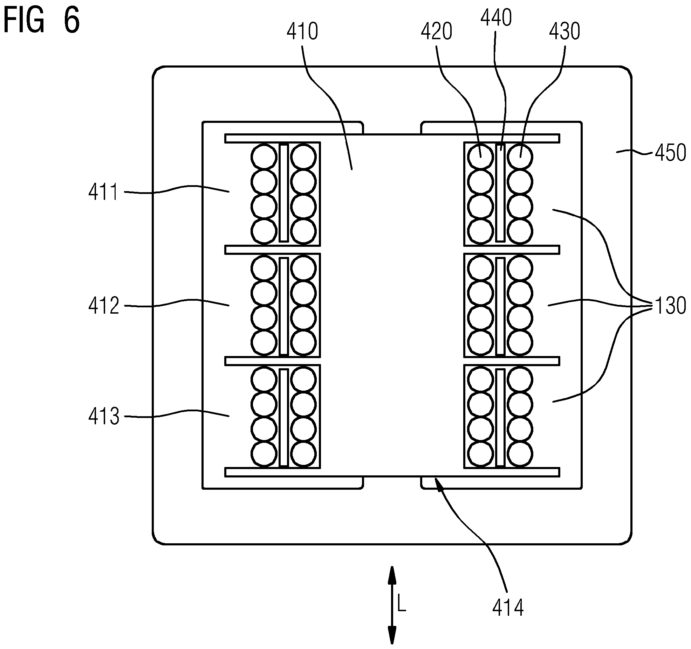

Die Figur 6 zeigt eine weitere bevorzugte Ausgestaltung und Anordnung der Transformatoren 130 für den Fall, dass zwei oder mehr Überwachungskanäle 100 vorhanden sind, also beispielsweise für den in der Figur 3 gezeigten Fall mit drei Überwachungskanälen 100 und drei Transformatoren 130.

Bei dem Ausführungsbeispiel gemäß Figur 6 handelt es sich bei den Transformatoren 130 um Spulentransformatoren, die jeweils eine Primärspule 420 und eine Sekundärspule 430 umfassen, die auf einem Spulenkörperabschnitt 411, 412 und 413 eines Spulenkörpers 410 aufgewickelt sind. Die Primärspule 420 ist von der Sekundärspule 430 jeweils durch eine Isolation 440 elektrisch voneinander getrennt.

Bei dem Ausführungsbeispiel gemäß Figur 6 sind die Primärspulen 420 der drei Transformatoren 130 radial innenliegend und die Sekundärspulen 430 radial außenliegend angeordnet; alternativ kann die radiale Anordnung auch umgekehrt sein.

Die Spulenkörperabschnitte 411, 412, und 413 der drei Transformatoren 130 sind axial entlang der Längsachse L des Spulenkörpers 410 versetzt bzw. hintereinander benachbart angeordnet.

Bei dem Ausführungsbeispiel gemäß Figur 6 teilen sich die Transformatoren 130 einen gemeinsamen Transformatorkern 450, der sich axial durch ein Durchgangsloch 414 im Spulenkörper 410 hindurch erstreckt. Ein Vorteil eines gemeinsamen Transformatorkerns 450 ist auch hier darin zu sehen, dass ein sekundärseitiges Auslösesignal S eines einzigen Überwachungskanals 100 gleichzeitig ein Auslösesignal S in den Primäreinheiten aller Überwachungskanäle 100 hervorruft, also alle Überwachungskanäle 100 primärseitig das Sicherungselement 60 gleichzeitig aktivieren.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Spannungswandler
- 2: Schaltung
- 11: Primärseite
- 12: Sekundärseite
- 20: Betriebstransformator
- 21: Primärwicklung
- 30: Steuereinrichtung
- 31: Stromversorgungseingang
- 40: Schaltelement
- 50: Überwachungseinrichtung
- 60: Sicherungselement
- 100: Überwachungskanal
- 110: Primäreinheit
- 111: Primärschaltelement
- 111a: Zündeingang
- 120: Sekundäreinheit
- 121: Vergleichselement
- 122: Logikschaltung
- 123: Sekundärschaltelement
- 130: Transformator
- 131: Anschlussseite
- 132: Anschlussseite
- 200: Leiterplatte
- 210: Transformatorkern
- 230: Abstandshalter
- 240: Platinenverbinder
- 300: Basisleiterplatte
- 410: Spulenkörper
- 411: Spulenkörperabschnitt
- 412: Spulenkörperabschnitt
- 413: Spulenkörperabschnitt
- 414: Durchgangsloch
- 420: Primärspule
- 430: Sekundärspule
- 440: Isolation
- 450: Transformatorkern
- C1: Eingangskapazität / Kondensator
- C2: Ausgangskapazität
- C3: Kapazität
- D: Diode
- D1: Diode
- D2: Diode
- L: Längsachse
- R1-R5: Widerstand
- S: Auslösesignal
- Ua: Ausgangsspannung
- Ue: Eingangsspannung
- Ui: interne Spannung
- V120: Vergleichsschaltung

## Patentansprüche

1. Spannungswandler (1) mit einer Primärseite (11) zum Anlegen einer Eingangsspannung (Ue) und einer Sekundärseite (12), an der der Spannungswandler (1) eine Ausgangsspannung (Ua) zur Verfügung stellt,
wobei
- der Spannungswandler (1) eine Überwachungseinrichtung (50) mit mindestens einem Überwachungskanal (100) aufweist, der einen Transformator (130) umfasst,
- wobei der Transformator (130) eine auf der Sekundärseite (12) des Spannungswandlers (1) angeordnete Sekundäreinheit (120) des Überwachungskanals (100) mit einer auf der Primärseite (11) des Spannungswandlers (1) angeordneten Primäreinheit (110) des Überwachungskanals (100) unter Potentialtrennung verbindet und eine elektromagnetische Übertragung eines von der Sekundäreinheit (120) ausgelösten Auslösesignals (S) zur Primäreinheit (110) ermöglicht,
- wobei die Sekundäreinheit (120) dazu ausgestaltet ist, das Auslösesignal (S) auszulösen, wenn eine überwachte Spannung, die der Ausgangsspannung (Ua) entspricht oder von dieser abhängt, auf der Sekundärseite (12) einen vorgegebenen Maximalspannungswert überschreitet, und
- wobei die Primäreinheit (110) dazu ausgestaltet ist, bei Empfang des Auslösesignals (S) den Spannungswandlerbetrieb des Spannungswandlers (1) zu deaktivieren.
**dadurch gekennzeichnet, dass** die Überwachungseinrichtung (50) zwei oder mehr Überwachungskanäle (100) aufweist, die jeweils einen Transformator (130), eine Primäreinheit (110) und eine Sekundäreinheit (120) aufweisen.

2. Spannungswandler (1) nach Anspruch 1,
**dadurch gekennzeichnet, dass**
- die Transformatoren (130) der Überwachungskanäle (100) jeweils Planartransformatoren sind und
- die Planartransformatoren übereinander gestapelt sind.

3. Spannungswandler (1) nach Anspruch 1,
**dadurch gekennzeichnet, dass**
- die Transformatoren (130) der Überwachungskanäle (100) jeweils eine Primärspule (420) und eine Sekundärspule (430) umfassen und
- die Primärspulen (420) und die Sekundärspulen (430) auf ein und demselben Spulenkörper (410) aufgewickelt sind.

4. Spannungswandler (1) nach einem der voranstehenden Ansprüche 1 bis 3,
**dadurch gekennzeichnet, dass** sich die Transformatoren (130) der Überwachungskanäle (100) einen gemeinsamen Transformatorkern (450) teilen.

5. Spannungswandler (1) nach Anspruch 4,
**dadurch gekennzeichnet, dass** der gemeinsame Transformatorkern (450) sättigungsfrei gleichzeitig die Auslösesignale (S) aller Überwachungskanäle (100) übertragen kann.

6. Spannungswandler (1) nach einem der voranstehenden Ansprüche,
**dadurch gekennzeichnet, dass** die Primäreinheit (110) eines jeden Überwachungskanals (100) ein Primärschaltelement (111) aufweist, das bei Eingang des Auslösesignals (S) eingeschaltet wird und ein Sicherungselement (60) des Spannungswandlers (1) auslöst.

7. Spannungswandler (1) nach einem der voranstehenden Ansprüche 1 bis 6,
**dadurch gekennzeichnet, dass** die Primärschaltelemente (111) elektrisch parallelgeschaltet sind und jeweils elektrisch mit ein und demselben Anschluss des Sicherungselements (60) in Verbindung stehen.

8. Spannungswandler (1) nach Anspruch 6 oder 7,
**dadurch gekennzeichnet, dass** das Sicherungselement (60) mit der Eingangsspannung (Ue) beaufschlagt wird, wenn zumindest eines der Primärschaltelemente (111) eingeschaltet wird.

9. Spannungswandler (1) nach einem der voranstehenden Ansprüche 6 bis 8,
**dadurch gekennzeichnet, dass** das Auslösen des Sicherungselements (60) eine den Spannungswandlerbetrieb des Spannungswandlers (1) steuernde Steuereinrichtung (30) deaktiviert und damit einen Energietransfer von der Primärseite (11) zur Sekundärseite (12) abschaltet.

10. Spannungswandler (1) nach Anspruch 9,
**dadurch gekennzeichnet, dass** das Auslösen des Sicherungselements (60) ein Abschalten der Versorgungsspannung der Steuereinrichtung (30) bewirkt.

11. Spannungswandler (1) nach einem der voranstehenden Ansprüche,
**dadurch gekennzeichnet, dass** das Sicherungselement (60) eine dauerhafte Abschaltung bewirkt, insbesondere eine Schmelzsicherung ist.

12. Spannungswandler (1) nach einem der voranstehenden Ansprüche,
**dadurch gekennzeichnet, dass**
- die Sekundäreinheit (120) eines jeden Überwachungskanals (100) ein mit dem Transformator (130) des jeweiligen Überwachungskanals (100) elektrisch in Reihe liegendes Sekundärschaltelement (123) sowie eine Vergleichsschaltung (V120) aufweist,
- wobei die Vergleichsschaltung (V120) bei Überschreiten des Maximalspannungswerts das Sekundärschaltelement (123) einschaltet und einen das Auslösesignal (S) bildenden Strompuls durch den Transformator (130) auslöst.

13. Spannungswandler (1) nach einem der voranstehenden Ansprüche,
**dadurch gekennzeichnet, dass**
- der Spannungswandler (1) einen die Sekundärseite (12) von der Primärseite (11) potentialmäßig trennenden Betriebstransformator (20) aufweist, der im Wandlerbetrieb des Spannungswandlers (1) mit Strompulsen beaufschlagt wird,
- wobei das Schalten der Strompulse von der Steuereinrichtung (30) des Spannungswandlers (1) mittels eines mit der Primärwicklung des Betriebstransformators (20) elektrisch in Reihe liegenden Schaltelements (40) gesteuert wird, das von der Steuereinrichtung (30) des Spannungswandlers (1) ein- und ausgeschaltet wird.

14. Verfahren zum Betreiben eines Spannungswandlers (1), der mit einer Primärseite (11) zum Anlegen einer Eingangsspannung (Ue) und einer Sekundärseite (12), an der der Spannungswandler (1) eine Ausgangsspannung (Ua) zur Verfügung stellt, ausgestattet ist,
**dadurch gekennzeichnet, dass**
- eine Überwachungseinrichtung (50) zwei oder mehr Überwachungskanäle (100) aufweist, die jeweils einen Transformator (130), eine Primäreinheit (110) und eine Sekundäreinheit (120) aufweisen,
- auf der Sekundärseite (12) ein Auslösesignal (S) ausgelöst wird, wenn eine auf der Sekundärseite (12) überwachte Spannung, die der Ausgangsspannung (Ua) entspricht oder von dieser abhängt, einen vorgegebenen Maximalspannungswert überschreitet,
- das Auslösesignal (S) über einen Transformator (130), der die Primärseite (11) des Spannungswandlers (1) und die Sekundärseite (12) des Spannungswandlers (1) potentialmäßig getrennt hält, elektromagnetisch zu der Primärseite (11) übertragen wird und
- bei Empfang des Auslösesignals (S) auf der Primärseite (11) der Spannungswandlerbetrieb des Spannungswandlers (1) auf der Primärseite (11) deaktiviert wird.
